# EUROPÄISCHE PATENTANMELDUNG

(11) **EP 1 233 607 A2**
(43) Veröffentlichungstag der Anmeldung: **21.08.2002**
(21) Anmeldenummer: 02001944.4
(22) Anmeldetag: 01.02.2002
(51) Int. Cl.: H04N 1/32, H04N 1/00

(54) **Dokumentabtastvorrichtung**

(30) Priorität: 14.02.2001 US 783691
(71) Anmelder: Heidelberger Druckmaschinen Aktiengesellschaft, 69115 Heidelberg (DE)
(72) Erfinder: Beyerlein, Michael, Rochester, NY 14621 (US); Christopher, Leonard R., Fairport, NY 14450 (US); Scott, Lavender D., Rochester, NY 14612 (US)
(74) Vertreter: Franzen, Peter

(57) **Zusammenfassung**

Eine Dokumentabtastvorrichtung (10) ist darauf ausgelegt, benutzerseitig gewählte Abtastparameter an einen Scanner (20) von einer Vielzahl von Orten zu übergeben. Die Dokumentabtastvorrichtung (10) umfasst eine Verriegelung, um die Ausführung nachfolgend übergebener Abtastparameter auszuschließen, bevor ein zuvor übergebener Abtastauftrag abgeschlossen worden ist. Die Dokumentabtastvorrichtung (10) sieht zudem die Verzögerung der Ausführung eines übergebenen Abtastauftrags vor, und zwar so lange, bis der Benutzer ein Bestätigungssignal erteilt.

## Beschreibung

Die vorliegende Erfindung betrifft eine Dokumentabtastvorrichtung und insbesondere die Verwaltung eines Scanners und eines Druckers durch einen unabhängigen Scannercomputer und Druckercomputer, wobei benutzerseitig gewählte Abtastparameter durch den Druckercomputer und durch den Scannercomputer übergeben werden können.

Elektrofotografische Kopierverfahren sind nach dem Stand der Technik bekannt und finden in Maschinen Anwendung, die von kleinen Bürokopierern bis hin zu Systemen für die Dokumenterstellung in hoher Auflage reichen. Unter hoher Auflage könnte in diesem Zusammenhang die betriebsinterne Veröffentlichung verstanden werden, bei der die Anzahl der Kopien hoch genug ist, um den internen Bedarf zu decken, während sie die Anforderungen in Bezug auf Anzahl und Druckgeschwindigkeit bei weitem nicht decken kann, die beispielsweise im Zeitungsdruck oder im Buchdruck für den öffentlichen Gebrauch notwendig sind.

Die aktuelle Generation der elektrofotografischen Kopierer und Drucker arbeitet digital. Die Anfertigung einer Kopie eines Bildes umfasst das Abtasten (Scannen) eines Bildes, das digitale Aufzeichnen des abgetasteten Bildes, das Speichern des aufgezeichneten Bildes, das Übertragen des gespeicherten Bildes zu einer Druckvorrichtung und das Drucken des Bildes. Das abgetastete Bild lässt sich vergrößern, verkleinern oder auf andere Weise vor dem Drucken manipulieren.

Um auflagenstarke Drucksysteme im vollen Umfang zu nutzen, sind Mittel zur Steuerung dieser Systeme von mehreren Orten aus erforderlich.

Die vorliegende Erfindung sieht eine Dokumentabtastvorrichtung vor, die einen Scanner umfasst, der an einen separaten und unabhängigen ersten Computer angeschlossen ist, wobei der erste Computer mit einer Scannerbedienfläche ausgestattet ist, und einem Drucker, der mit einem zweiten, separaten und unabhängigen Computer verbunden ist, und wobei der zweite Computer mit einer Druckerbedienfläche ausgestattet ist, wobei der erste und zweite Computer in Wirkbeziehung miteinander verbunden sind. Der Scanner ist wahlweise durch Abtastparameter steuerbar, die von einem Benutzer über die Druckeroder Scannerbedienfläche eingegeben und übergeben werden. Die Vorrichtung ermöglicht einem Benutzer, Abtastparameter über die Scannerbedienfläche oder über die Druckerbedienfläche auszuwählen und einzugeben, um einen durch den Scanner auszuführenden Abtastauftrag zu bestimmen.

In einer weiteren Konfiguration des Systems schließt die Erfindung Abtastparameter für nachfolgend übergebene Abtastaufträge von der Ausführung so lange aus, bis Abtastparameter für aktuelle oder zuvor übergebene Abtastaufträge vollständig ausgeführt worden sind. Das System ermöglicht es, Abtastparameter für nachfolgend übergebene Abtastaufträge zu erkennen und in eine Warteschlange zu stellen.

Eine zusätzliche Konfiguration der Erfindung sieht die verzögerte Ausführung übergebener Abtastparameter vor, bis eine Bestätigung oder eine zweite Eingabe durch den Benutzer erfolgt.

Die vorliegende Erfindung sieht zudem einen Drucker vor, der mit einer Vielzahl von Computern in Wirkbeziehung verbindbar ist, wobei jeder Computer in Wirkbeziehung mit einem entsprechenden Scanner verbunden ist, wodurch der Drucker Informationen empfangen kann, die von einem beliebigen Scanner aus der Vielzahl von Scannern abgetastet worden sind.

Die vorliegende Erfindung sieht zudem die Bereitstellung von Dateien vor, die aus der Ausführung der Abtastparameter resultieren. Die Dateien lassen sich speichern, drucken oder speichern und drucken. Zudem lassen sich gespeicherte Dateien mit der Ausführung eines Abtastauftrags wahlweise abrufen, sortieren, neu ordnen, modifizieren oder kombinieren.

Die Erfindung wird im folgenden anhand in der Zeichnung dargestellter Ausführungsbeispiele näher erläutert.

Es zeigen
- Fig. 1: eine schematische Zeichnung der Dokumentabtastvorrichtung.
- Fig. 2: ein Ablaufdiagramm zur Darstellung der Übergabe eines Abtastauftrags in der Dokumentabtastvorrichtung.
- Fig. 3: ein Ablaufdiagramm zur Darstellung zusätzlicher Funktionen der Dokumentabtastvorrichtung.

Wie in den Zeichnungen dargestellt, umfasst die vorliegende Erfindung eine Dokumentabtastvorrichtung 10 zum wahlweisen Abtasten eines Dokuments zur Erzeugung einer entsprechenden elektronischen Datei, die hier als Abtastauftrag bezeichnet wird.

Der Begriff "Abtastauftrag" umfasst das Abtasten, das Erstellen einer entsprechenden Datei und das Speichern der Datei. Der Abtastauftrag kann jedoch auch das Abtasten und Drucken des Dokuments ohne dauerhafte Speicherung der abgetasteten Bilddatei umfassen. Der Abtastauftrag ist zumindest teilweise durch benutzerseitig ausgewählte und eingegebene Abtastparameter definiert. Die Abtastparameter umfassen, ohne darauf beschränkt zu sein, eine automatische oder manuelle Veranlassung des Abtastauftrags, die Art des abzutastenden Dokuments, etwa Fotografie, Text, Farbe, Schwarzweiß, sowie Bildsteuerungsparameter, wie Kontrast, Helligkeit, den Speicherort der Datei, das Drucken der Datei, die Parameter zur Steuerung des Druckvorgangs, einschließlich Papierformat, Bildverkleinerung oder Bildvergrößerung und Ausrichtung sowie den Prozess, mit dem die Datei beaufschlagt wird, etwa das Speichern, das Speichern und Drucken oder das Drucken. Der Begriff Abtastauftrag umfasst daher einen entsprechenden Satz von Abtastparametern. Die Übergabe eines Abtastauftrags umfasst die Übergabe von Abtastparametern für einen gegebenen Abtastauftrag.

Zum Zwecke der Beschreibung umfasst der Begriff "Dokument" den abzutastenden Gegenstand, wobei das Dokument eine einzelne Seite oder ein Bogen sein kann, eine Vielzahl von Seiten oder Blättern, wobei die Seiten ein gleiches oder ein unterschiedliches Format aufweisen können. Das Dokument kann Text, Bilder, Diagramme, Grafiken oder andere Sichtzeichen umfassen. Bei dem Dokument kann es sich um Papier, Kunststoff oder ein anderes Substrat handeln, auf dem Sichtzeichen nachhaltig aufgezeichnet werden können. Das Dokument kann gebunden sein oder lose Blätter umfassen. Wenn das Originaldokument abgetastet wird, wird das abgetastete Bild elektronisch in einer entsprechenden Datei gespeichert. Zwar sind verschiedene Speicherparadigmen möglich, aber die erfindungsgemäße Vorrichtung ist zur Erstellung einer separaten Datei für jede Seite oder für jeden Bogen des Dokuments ausgelegt.

Die Dokumentabtastvorrichtung 10 umfasst einen Scanner 20, einen Scannercomputer 22, einen Drucker 30 und einen Druckercomputer 32.

Der Scanner 20 ist ein beliebiger, kommerziell verfügbarer Scanner, der in der Lage ist, ein Dokument abzutasten und eine entsprechende elektronische Darstellung in Form einer Datei zu erzeugen. Zur Effizienzsteigerung umfasst der Scanner 20 einen Einzelblatteinzug, der als automatischer Einzelblatteinzug 26 ausgebildet sein kann. Der Scanner 20 umfasst eine Anzahl von Bedienelementen zum Betrieb des Scanners als alleinstehende Vorrichtung. Eines der Bedienelemente ist eine Start- oder Abtast-Taste, die den Scanner veranlasst, den Abtastvorgang zu beginnen. Der Scanner 20 kann auch eine Anzeige zur Angabe des Betriebsstatus umfassen.

Der Scannercomputer 22 ist mit dem Scanner 20 und einem Hub oder einer Vermittlungseinheit 12 verbunden. Der Scannercomputer 22 kann ein Computer aus einer beliebigen Konfiguration oder Workstation sein, beispielsweise von IBM oder Sun. In einer bevorzugten Konfiguration umfasst der Scannercomputer 22 eine Speichereinrichtung 25 für elektronische Daten oder ist damit verbunden. Die Speichereinrichtung kann eine Einrichtung aus einer Vielzahl von Konfigurationen sein, u.a. aus Bandlaufwerken, Festplatten und optischen Speichern. Der Scannercomputer 22 umfasst eine entsprechende Anzeige 40 und eine Eingabe 42. Die Anzeige kann eine beliebige CRT-, LED- oder LCD-Vorrichtung oder ein Flachbildschirm sein. Die Eingabe kann eine beliebige Eingabevorrichtung sein, also eine Tastatur, ein Tastenfeld oder ein Steuerknüppel. Eine bevorzugte Eingabevorrichtung umfasst Software, die mit der Anzeige zusammenwirkt, um einen softwaregesteuerten, berührungsempfindlichen Bildschirm zu bilden. Die Software ist vorzugsweise derart ausgewählt, dass sie die Vielzahl von Abtastparametern abfragt und entgegennimmt. Der Scannercomputer 22 stellt somit eine Scannerbenutzeroberfläche 24 bereit, über die Abtastparameter an den Scanner 20 gesendet werden können.

Der Druckercomputer 32 ist mit dem Drucker 30 über die Vermittlungseinheit 12 verbunden. Der Druckercomputer 32 kann ein Computer aus einer beliebigen Konfiguration oder Workstation sein, vorzugsweise ein Computer von Sun. In einer bevorzugten Konfiguration umfasst der Druckercomputer 32 eine Speichereinrichtung 36 für elektronische Daten oder ist damit verbunden. Die Speichereinrichtung 36 kann eine Einrichtung aus einer Vielzahl von Konfigurationen sein, u.a. aus Bandlaufwerken, Festplatten und optischen Speichern. Der Druckercomputer 32 umfasst eine entsprechende Anzeige 40 und eine Eingabe 42. Die Anzeige kann eine beliebige CRT-, LED- oder LCD-Vorrichtung oder ein Flachbildschirm sein. Die Eingabe kann eine beliebige Eingabevorrichtung sein, also eine Tastatur, ein Tastenfeld oder ein Steuerknüppel. Eine bevorzugte Eingabe wirkt mit der Anzeige zusammen, um einen berührungsempfindlichen Schirm zu bilden. Der Druckercomputer 32 stellt somit eine Druckerbenutzeroberfläche 34 bereit, über die Abtastparameter an den Scanner 20 gesendet werden können.

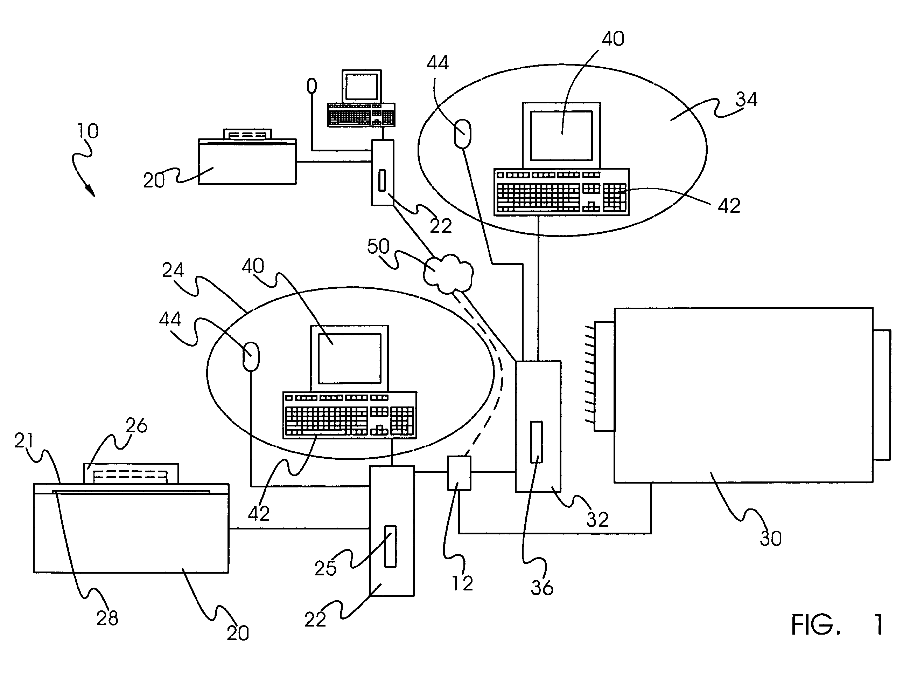

In Fig. 1 umfasst der Scannercomputer 22 und der Druckercomputer 32 jeweils die Anzeige, eine Tastatur und eine Maus 44 mit (nicht gezeigter) zugehöriger Software, obwohl auch andere Vorrichtungen vorhanden sein können.

Der Drucker 30 kann ein Drucker aus einer Vielzahl kommerziell verfügbarer Konfigurationen sein, wie der DigiMaster 9110 von Heidelberg Digital. Der Drucker 30 ist zur Erstellung eines gedruckten Bildes in Ansprechen auf eine elektronische Eingabe ausgelegt. Der Drucker 30 kann eine Vielzahl von Papierzuführungsfächern zur wahlweisen Verwendung unterschiedlicher Papierformate oder Papiersorten umfassen. In einer bevorzugten Konfiguration kann der Drucker 30 beide Seiten eines gegebenen Bogens bedrucken.

Die Vermittlungseinheit 12 ist eine beliebige Einheit aus einer Vielzahl kommerziell verfügbarer Vorrichtungen, wie die 3Comm 10/100 Base -TX Vermittlungseinheit mit einem Durchsatz von 100 mBit/s. Die Vermittlungseinheit 12 ist mit dem Scannercomputer 22 und mit dem Druckercomputer 32 verbunden. Der Druckercomputer 32 ist mit dem Drucker 30 über die Vermittlungseinheit 12 verbunden. In einer typischen Konfiguration sind der Scanner 20, der Scannercomputer 22, der Druckercomputer 32 und der Drucker 30 zueinander benachbart angeordnet. Scanner und zugehörige Computer können jedoch auch entfernt in einem anderen Raum oder Gebäude angeordnet sein. Die Vermittlungseinheit 12 kann über ein Netz 50, etwa das Internet oder das Intranet, mit einem oder mit mehreren entfernten Scannern verbunden sein, wobei jedem Scanner ein Computer zugeordnet ist. Der Scanner 20, der Scannercomputer 22, der Drucker 30 und der Druckercomputer 32 können untereinander kommunizieren. Der Scannercomputer 22 kann demnach Steuersignale sowie Datensignale vom Scanner empfangen und an diesen senden, und der Druckercomputer 32 kann mit dem Scannercomputer 22 kommunizieren, um dem Drucker 30 entsprechende Signale in einer für den Drucker verständlichen Sprache bereitzustellen. Jede Komponente kann eine gemeinsame Computersprache verwenden. Alternativ hierzu können der Scanner 20 und der Drucker 30 eigene Computersprachen verwenden, wobei der Scannercomputer 22 und der Druckercomputer 32 eine gemeinsame Sprachverbindung vorsehen. Der Begriff zugehöriger Computer bezeichnet Computer, die mit Software und zugehöriger Hardware zur Ausbildung einer Benutzeroberfläche ausgestattet sind, durch die Abtastparameter eingegeben und nachfolgend an den Scanner übergeben werden können, und zwar in einer Sprache, die von dem entsprechenden Scanner implementiert oder verstanden werden kann.

Die Dokumentabtastvorrichtung 10 ist derart konfiguriert, dass der Scanner 20 durch die benutzerseitig übergebenen Abtastparameter eines Abtastauftrags steuerbar ist, der über die Benutzeroberfläche 24, 34 entweder am Scannercomputer 22 oder am Druckercomputer 32 übergeben worden ist, um die entsprechende, resultierende Datei des abgetasteten Bildes zu erzeugen. Die Abtastparameter können also über die Scannerbenutzeroberfläche oder über die Druckerbenutzeroberfläche eingegeben werden.

Ein Satz der eingegebenen Abtastparameter für einen gegebenen Abtastauftrag kann Untermengen von Abtastparametern umfassen. Jede Untermenge von Abtastparametern kann das Abtasten eines entsprechenden Teils oder einer Seite des Dokuments steuern. Beispielsweise kann ein Teil des Dokuments ein fotografisches Bild umfassen, das eine bessere Abbildungsqualität erfordert als ein Teil, der nur Text enthält, wobei zur Steuerung der Abtastung eines derartigen Teils eine andere Untermenge von Abtastparametern eingegeben wird. Ein unkomplizierter Abtastauftrag erfordert möglicherweise keine wechselnden Abtastparameter, weshalb der Abtastvorgang durch eine einzelne Untermenge von Abtastparametern steuerbar ist, die mit der übergeordneten Menge von Abtastparametern identisch sind.

Die Dokumentabtastvorrichtung 10 ist mit einer Verriegelung versehen, die dafür sorgt, dass die zuerst eingehenden Abtastaufträge auch zuerst verarbeitet werden. Die Verriegelungssoftware befindet sich normalerweise auf dem Druckercomputer 32 und eine damit zusammenwirkende Software auf dem Scannercomputer 22. Das Verriegelungsmerkmal ermöglicht oder unterbindet die Ausführung eines Abtastauftrags durch den Scanner 20 in Ansprechen auf eine Anfrage, die über den Druckercomputer 32 weitergeleitet wird, und zwar unabhängig davon, an welcher Benutzeroberfläche der Abtastauftrag veranlasst wurde. Sobald der aktuelle Abtastauftrag übergeben worden ist, kann ein nachfolgend übergebener Abtastauftrag erst dann abgetastet werden, wenn der erste Abtastauftrag abgeschlossen ist. Je nach Art des Abtastauftrags sehen die von dem Benutzer eingegebenen Abtastparameter vor, dass die Dokumentabtastvorrichtung 10 den Abschluss des Auftrags entweder automatisch oder manuell erkennt. In einem automatischen Einzugbetrieb wird der Abtastauftrag als abgeschlossen erkannt, wenn alle Blätter von dem automatischem Einzelblatteinzug 26 zur Abtastung transportiert worden sind, wie dies beispielsweise von den Papiereinzugsvorrichtungen für Kopiergeräte bekannt ist. Nachdem der letzte Bogen eines Dokuments eingezogen worden ist, wird eine mechanische Vorrichtung aktiviert, um ein entsprechenden Signal zu liefern. Ein automatischer Abtastauftrag kann einen einzelnen Bogen umfassen und von dem Vorlagenglas 28 des Scanners 20 abgetastet werden. Der automatische Betrieb ist also nicht auf die Verwendung des automatischen Einzelblatteinzugs 26 beschränkt. In einem manuellen Einzugsbetrieb wird der Abtastauftrag als abgeschlossen erkannt, wenn der Benutzer ein manuelles Signal erzeugt hat, etwa durch Betätigen der Schaltfläche "Abtastauftrag beendet" auf der Benutzeroberfläche, über die die Abtastparameter übergeben worden sind. Bei Aktivierung des Verriegelungsmerkmals fragt die Software auf dem Druckercomputer 32 den Scannercomputer 22 ab, um zu ermitteln, ob der Scanner 20 verfügbar ist.

Die Verriegelung arbeitet unabhängig davon, ob der nachfolgende Abtastauftrag über dieselbe Oberfläche oder über eine andere Oberfläche des vorherigen Druckauftrags übergeben worden ist. Eine erfolgreiche Übergabe von Abtastparametern bewirkt, dass der Benutzer den Scanner 20 praktisch "besitzt", worauf die Schaltfläche "Abtastauftrag beendet" auf der Benutzeroberfläche erscheint, über die der Abtastauftrag übergeben worden ist. Wenn ein neu übergebener Abtastauftrag wegen eines vorhandenen Abtastauftrags nicht ausgeführt werden kann, erscheint diese Information in einem Dialogfeld der Benutzeroberfläche. In einem Ausführungsbeispiel informiert das Dialogfeld den Benutzer darüber, dass der neue Abtastauftrag nach Abschluss des vorherigen Abtastauftrags neu übergeben werden muss. Der Status des Scanners 20 kann an der Benutzeroberfläche überwacht werden, und der Benutzer kann den Abtastauftrag neu übergeben, sobald der Scanner 20 verfügbar wird. In einem alternativen Ausführungsbeispiel informiert das Dialogfeld den Benutzer darüber, dass der neue Abtastauftrag in eine Warteschlange eingereiht worden ist, und dass er ausgeführt wird, wenn der vorherige Abtastauftrag oder wenn die vorherigen Abtastaufträge in der Warteschlange, die dem neuen Abtastauftrag vorausgehen, abgeschlossen worden sind. Mit anderen Worten werden die Abtastaufträge in der Warteschlange nach dem FIFO-Prioritätsprinzip (First In, First Out) abgearbeitet. Wahlweise kann das Dialogfeld den Benutzer darüber informieren, wie viele Abtastaufträge sich zu dem Zeitpunkt in der Warteschlange befinden, zu der der neue Auftrag übergeben wird, wobei ggf. eine Umstellung der in der Warteschlange vorhandenen Abtastaufträge möglich ist. Der Status des Scanners 20 lässt sich von jeder Benutzeroberfläche einsehen, die Teil der Dokumentabtastvorrichtung 10 ist. In der Praxis hat es sich als sinnvoll erwiesen, die Verriegelungssoftware auf dem Druckercomputer 32 zu implementieren, so dass eine Abtastauftragsanfrage an den Scannercomputer 22 geleitet wird, der die Verfügbarkeit des Scanners 20 ermittelt. Die Verfügbarkeit des Scanners 20 wird vom Scannercomputer 22 an den Druckercomputer 32 gemeldet. Die Verriegelungssoftware zeigt dann dem Benutzer die erfolgreiche Übergabe des Abtastauftrags oder das Dialogfeld zum Scannerstatus an.

Unabhängig davon, wo die Abtastparameter eingegeben werden, wird das Dokument physisch und manuell in dem Scanner 20 bereitgestellt. Die Bereitstellung im Scanner 20 kann blattweise oder stapelweise erfolgen. Typischerweise liegt das Dokument als eine Folge von Bogen im identischen Format vor. In diesem Fall wird das Originaldokument in den automatischen Einzelblatteinzug 26 eingelegt, und nach Starten des Abtastauftrags werden die Blätter automatisch eingezogen und nacheinander abgetastet. Es gibt jedoch Fälle, in denen das Originaldokument nicht automatisch eingezogen werden kann, wie beispielsweise bei den Seiten eines Buches. In einem derartigen Fall muss jede Seite manuell zwischen dem Abasten der aufeinanderfolgenden Bilder positioniert werden.

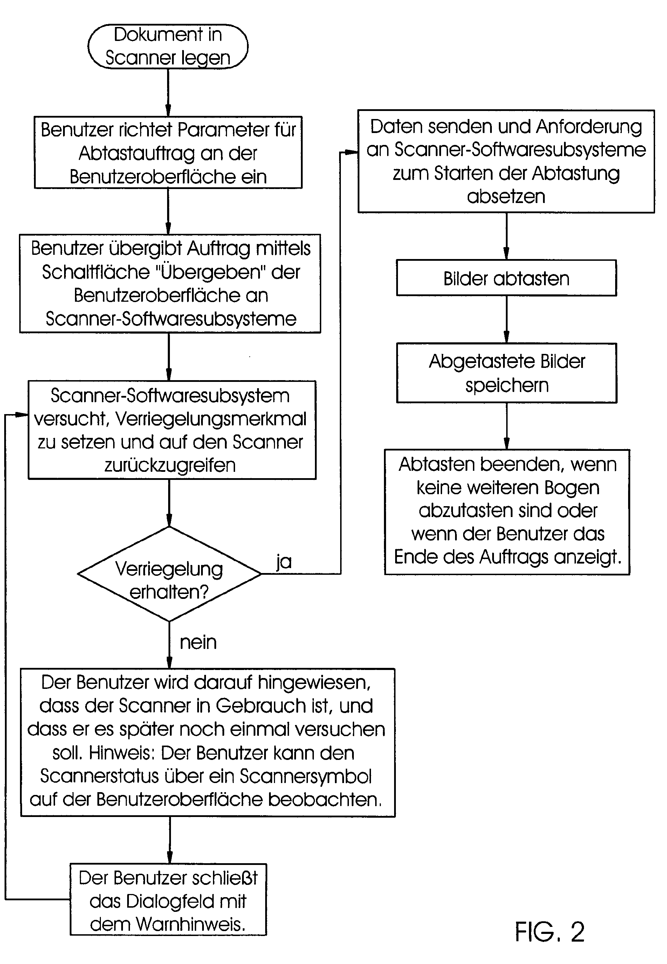

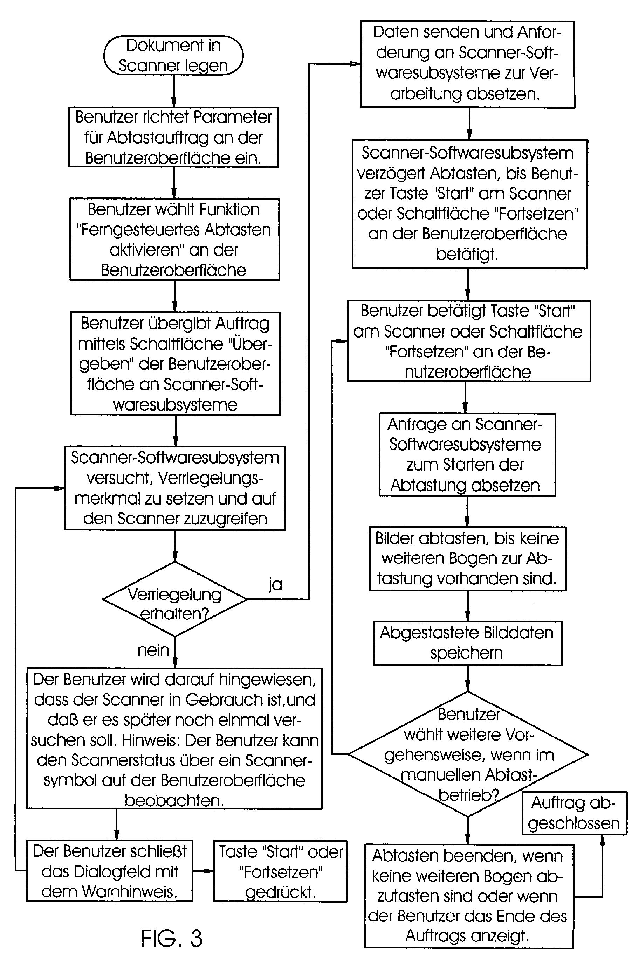

Nachfolgend werden Beispiele zur Ausführung von Abtastaufträgen beschrieben. Fig. 2 und 3 sind typische Ablaufdiagramme, die zur allgemeinen Bezugnahme dienen sollen, ohne den Anspruch zu erheben, alle Details eines bestimmten Auftrags wiederzugeben. Fig. 2 zeigt die Verwendung des Verriegelungsmerkmals; Fig. 3 betriff einen manuellen Abtastauftrag, in dem übergebene Abtastparameter bis zur Bestätigung durch den Benutzer verzögert werden, beispielsweise durch das entfernte Startaktivierungsmerkmal.

In einem Beispiel eines Abtastauftrags umfasst das gesamte Dokument einen einzelnen Stapel einzelner Bogen, die in den automatischen Einzelblatteinzug 26 eingelegt und ohne Unterbrechung verarbeitet werden können. Wie nach dem Stand der Technik von Kopiergeräten bekannt ist, ist der Scanner 20 darauf ausgelegt, das Vorhandensein des Originaldokuments in dem automatischen Einzelblatteinzug 26 zu erkennen und zu erkennen, wenn alle Bogen abgetastet worden sind.

Der Benutzer kann die Steuerung des Abtastauftrags über die Scannerbenutzeroberfläche 24 oder über die Druckerbenutzeroberfläche 34 wählen. Aus einer Auswahl verschiedener Instrumente der Benutzeroberfläche aktiviert der Benutzer zunächst eine Schaltfläche "Scannen". Hierdurch wird die Dokumentabtastvorrichtung 10 angewiesen, einen Abtastauftrag durchzuführen. Durch Aktivieren des Registers "Auftragsziel" werden die Optionen "Drucken", "Speichern" und "Drucken und speichern" angeboten. Über ein Pull-Down-Menü oder ein Pop-Up-Fenster wird die Auswahl "Auto" und "Manuell" bereitgestellt. Hiermit kann der Auftrag in dem entsprechenden automatischen Einzugsbetrieb oder im manuellen Einzugsbetrieb ausgeführt werden.

Der Benutzer hat dann die Möglichkeit weitere gewünschte Abtastparameter über die Benutzeroberfläche einzugeben. Wenn über den gesamten Auftrag keine Veränderung von Abtastparametern erforderlich ist, kann der Benutzer die Option "Auto" wählen. Sobald die Abtastparameter eingegeben worden sind, aktiviert der Benutzer auf der Benutzeroberfläche eine Schaltfläche "Auftrag übergeben", die an der entsprechenden Anzeige dargestellt wird. Wenn alle zuvor übergebenen Abtastaufträge abgeschlossen worden sind, veranlasst die Aktivierung der Schaltfläche "Auftrag übergeben" auf der Benutzeroberfläche den Beginn des Abtastauftrags. Wie nach dem Stand der Technik bekannt ist, wird jeder nachfolgende Bogen des Dokuments aus dem Einzelblatteinzug 26 transportiert, abgetastet und in einem Stapel abgelegt. Ein Bogen kann also vom Vorlagenglas abgetastet werden, womit der Abtastauftrag als abgeschlossen gilt, wenn sich die Vorrichtung im Automatikbetrieb befindet. Im Automatikbetrieb gilt der Abtastauftrag als abgeschlossen, wenn das gesamte Originaldokument abgetastet worden ist, und wenn die Dokumentabtastvorrichtung 10 einen nachfolgend übergebenen Abtastauftrag entgegennehmen kann.

Im "manuellen" Betrieb sieht die Dokumentabtastvorrichtung 10 vor, dass der Abtastauftrag erst als abgeschlossen gilt, wenn der Benutzer ein dementsprechendes Signal eingegeben hat. Der Benutzer kann also den Einzelblatteinzug oder das Vorlagenglas des Scanners 20 zum Abtasten ausgewählter Teile des Dokuments verwenden. Die Schaltfläche "Abtastauftrag abgeschlossen" erscheint auf der Benutzeroberfläche, an der der Auftrag übergeben worden ist. Die Schaltfläche "Abtastauftrag abgeschlossen" ermöglicht dem Benutzer, den Abschluss des gegebenen Abtastauftrags zu melden, wodurch die Steuerung des Scanners freigegeben wird. Der "manuelle" Betrieb wird benutzt, wenn unterschiedliche Abtastparameter für verschiedene Teile des Originaldokuments angegeben werden sollen, oder wenn das Originaldokument nicht automatisch eingezogen werden kann. Ein Originaldokument kann beispielsweise einige reine Textseiten und weitere Seiten mit Fotografien enthalten, die einer besseren Bildqualität bedürfen. Der Benutzer aktiviert eine Untermenge von Abtastparametern und übergibt diese für eine erste Seite oder für Blöcke von Seiten, legt die Seite(n) in den Einzug und aktiviert die Schaltfläche "Auftrag übergeben". Wenn alle zuvor übergebenen Abtastaufträge abgeschlossen sind, beginnt der Abtastvorgang und setzt sich fort, bis alle Seiten in dem Einzug abgetastet worden sind. Nachdem der Inhalt des Einzugs durch eine andere Seite oder durch mehrere Seiten ersetzt worden ist, gibt der Benutzer eine weitere Untermenge von Abtastparametern ein und aktiviert eine Schaltfläche "Fortsetzen" an der entsprechenden Benutzeroberfläche. Wenn das gesamte Originaldokument im "manuellen Betrieb" abgetastet worden ist, betätigt der Benutzer die Schaltfläche "Abtastauftrag abgeschlossen" auf der Benutzeroberfläche, was der Dokumentabtastvorrichtung 10 anzeigt, dass der Abtastauftrag abgeschlossen ist, und dass ein weiterer Abtastauftrag (der ggf. bereits eingerichtet worden ist) erfolgreich übergeben werden kann.

In einem weiteren Beispiel umfasst das Dokument mehrere Stapel, die in ihrer Gesamtheit nicht von dem Einzelblatteinzug 26 aufgenommen werden können. Der Benutzer kann jeden Stapel getrennt im "automatischen Betrieb" abtasten, wobei nach Abschluss jedes Stapels automatisch signalisiert wird, dass die Dokumentabtastvorrichtung 10 einen weiteren Auftrag übernehmen kann, wodurch der Benutzer das Vorrecht für den Folgestapel verlieren könnte. Vorzugsweise wird ein derartiges Dokument daher im "manuellen Betrieb" verarbeitet, auch wenn die Abtastparameter nicht wechseln. Der Benutzer geht dann auf dieselbe Weise vor, wie für das vorherige Beispiel beschrieben worden ist.

In einem weiteren Beispiel ist das Dokument ein Buch, das nicht von dem Einzelblatteinzug 26 verarbeitet werden kann. Ein derartiges Dokument wird im "manuellen Betrieb" abgetastet, wobei das Buch derart platziert wird, dass sich das gewünschte Bild auf dem Vorlagenglas 28 befindet. Der Benutzer gibt die gewünschte Menge der Abtastparameter für das erste Bild ein und betätigt dann die Schaltfläche "Auftrag übergeben", um das Abtasten des Bildes zu veranlassen. Um ein weiteres Bild abzutasten, bringt der Benutzer das Bild manuell in Position und betätigt die Schaltfläche "Fortsetzen" auf der Scannerbenutzeroberfläche 24 oder eine vorgesehene Taste "Start" 21 am Scanner. Die Schaltfläche "Fortsetzen" wird nach dem Abtasten jedes Bildes wählbar. Alternativ hierzu lässt sich die dedizierte "Start"-Taste derart steuern, dass sie in der Betriebsart für ferngesteuertes Abtasten, wie im vorliegenden Dokument erläutert, anwählbar ist. Der Vorgang wird wiederholt, bis alle erforderlichen Bilder abgetastet worden sind. Nachdem das letzte Bild abgetastet worden ist, betätigt der Benutzer die Schaltfläche "Abtastauftrag abgeschlossen", die an der Benutzeroberfläche erscheint, über die der Abtastauftrag übergeben worden ist. In einer bevorzugten Konfiguration kann der Abtastauftrag über jede der beiden Benutzeroberflächen eingegeben werden, und die Schaltfläche "Abtastauftrag abgeschlossen" ist an der jeweiligen Benutzeroberfläche aktivierbar.

In einem Ausführungsbeispiel, das insbesondere das Abtasten eines Buches betrifft, ist auf der Benutzeroberfläche eine Schaltfläche "Ferngesteuertes Abtasten aktivieren" vorgesehen. Diese Schaltfläche lässt sich aktivieren oder deaktivieren. Wenn "Ferngesteuertes Abtasten" aktiviert ist, wird durch Betätigen der Schaltfläche "Auftrag übergeben" der Abtastauftrag an den Scanner 20 übergeben, allerdings wird das Abtasten so lange verzögert, bis der Benutzer ein weiteres Signal übermittelt. Das weitere Signal wird durch benutzerseitige Aktivierung einer "Start"-Taste 21 am Scanner 20 übermittelt oder einer Schaltfläche "Fortsetzen" auf der Benutzeroberfläche, über die der Abtastauftrag übergeben worden war. Der Benutzer legt den ersten Bogen auf das Vorlagenglas 28 und übermittelt ein Eingabebestätigungssignal am Scanner 20 durch Betätigen der "Start"-Taste 21 am Scanner 20. Nachdem das erste Bild abgetastet worden ist, legt der Benutzer abwechselnd aufeinanderfolgende Bilder auf und betätigt jeweils erneut die "Start"-Taste 21. Nachdem alle erforderlichen Bilder abgetastet worden sind, betätigt der Benutzer die Schaltfläche "Abtastauftrag abgeschlossen" an der Benutzeroberfläche, über die der Abtastauftrag übergeben worden ist. Das Merkmal "Ferngesteuertes Abtasten aktivieren" erfordert also eine zweite oder bestätigende Eingabe über den Scanner oder eine Benutzeroberfläche, und zwar nach erfolgreicher Übergabe des Abtastauftrags und vor Beginn des Abtastvorgangs durch den Scanner 20. Im manuellen Betrieb ist vorgesehen, dass der Benutzer zwischen der Aktivierung und Deaktivierung des ferngesteuerten Abtastens wechseln kann.

Im manuellen Betrieb können eine Folge von Bildern aus einem Stapel und ein Bild aus einem Buch als Bilduntermengen betrachtet werden. In beiden Fällen muss die "Start"-Taste 21 oder die Schaltfläche "Fortsetzen" zwischen dem Abtasten aufeinanderfolgender Untermengen aktiviert werden; der Auftrag wird durch Betätigen der Schaltfläche "Abtastauftrag abgeschlossen" beendet, nachdem die letzte Untermenge abgetastet worden ist. Es ist möglicherweise jedoch nicht notwendig, die Abtastparameter eines manuell abgetasteten Originaldokuments zu ändern. In diesem Fall kann davon ausgegangen werden, dass alle Untermengen an Abtastparametern untereinander und mit dem übergeordneten Parametersatz identisch sind.

Es sei darauf hingewiesen, dass die Schaltfläche "Auftrag übergeben" nur für einen gegebenen manuellen Abtastauftrag aktiviert wird, auch wenn das Originaldokument in Form einzelner Bilduntermengen abgetastet wird.

Der Benutzer kann eine beliebige der Anweisungen "Drucken", "Speichern" und "Drucken und Speichern" zur Verarbeitung des abgetasteten Dokuments wählen. Bei Wahl von "Speichern" oder "Drucken und Speichern" wird jedes abgetastete Bild einzeln in einer entsprechenden elektronischen Datei gespeichert, aus der es anschließend abgerufen werden kann. Jede gespeicherte Datei lässt sich modifizieren, falls das gespeicherte Bild im Vergleich mit dem Originalbild verändert werden soll. Beispielsweise lässt sich ein fotografisches Bild verkleinern, vergrößern, zuschneiden, aufhellen oder abdunkeln, ebenso wie der Kontrast angehoben oder abgesenkt und die Farbbalance geändert werden kann. Eine von dem Dokument erstellte Kopie, die nicht notwendigerweise mit dem Dokument identisch sein muss, kann von den gespeicherten Bildern gedruckt werden.

Wenn ein Dokument über den Einzelblatteinzug 26 abgetastet wird, bewirkt das Betätigen der Taste "Auftrag übergeben" den Start des Abtastvorgangs (soweit der Abtastauftrag angenommen wird) gemäß der benutzerseitig eingegebenen Abtastparameter und setzt sich fort, bis der aktuelle Inhalt des Einzelblatteinzugs verarbeitet ist. Im "automatischen" Betrieb wird damit der Abtastauftrag automatisch beendet, während im "manuellen" Betrieb der Benutzer die Möglichkeit hat, neue Vorlagen einzulegen und das Abtasten durch Betätigen der "Start"-Taste 21 am Scanner 20 oder durch Betätigen der Schaltfläche "Fortsetzen" fortzusetzen. Die "Fortsetzen"-Schaltfläche überlagert auf der entsprechenden Benutzeroberfläche die Schaltfläche "Auftrag übergeben" als nicht wählbare oder als wählbare Schaltfläche. Die Schaltfläche wird wählbar, sobald ein Stapel abgearbeitet worden ist, wenn sich das System im "manuellen" Betrieb befindet. Um die Beendigung des Abtastauftrags anzuzeigen, betätigt der Benutzer die Schaltfläche " "Abtastauftrag abgeschlossen". Die Schaltfläche "Ferngesteuertes Abtasten aktivieren" lässt sich gemäß der Benutzervorgaben an aufeinanderfolgenden Stufen des im "manuellen" Betrieb durchgeführten Abtastauftrags aktivieren oder deaktivieren. Bei Aktivierung der Schaltfläche wird das Abtasten einer aktuellen Bilduntermenge verzögert, bis der Benutzer die "Start"-Taste 21 am Scanner 20 betätigt.

Auch wenn die Druckerbenutzeroberfläche 34 dem Benutzer die Möglichkeit erschließt, den Scanner 20 zu steuern, muss ein abgetastetes Dokument zum Zeitpunkt der Abtastung nicht notwendigerweise gedruckt werden, obwohl dies anzunehmen ist. Die Verwendung der Schaltfläche "Speichern" ermöglicht dem Benutzer, das Originaldokument vollständig abzutasten und die abgetasteten Bilder zu speichern, um sie später zu drucken. Die Druckverzögerung hat keine Auswirkung auf das Verriegelungsmerkmal; sobald das Abtasten abgeschlossen ist, ist das System bereit, ein weiteres Dokument abzutasten, unabhängig davon, ob die gespeicherten Bilder gedruckt werden.

Die Bereitstellung der Scannerbenutzeroberfläche 24 und der Druckerbenutzeroberfläche 34 stellt für die Arbeitsorganisation einer Druckvorrichtung einen großen Vorteil dar. Nach einem Szenario überwacht ein einziger Benutzer sowohl den Scanner 20 als auch den Drucker 30 und kann während der Ausführung des aktuellen Druckauftrags für die Eingabe der Abtastparameter eines nachfolgenden Abtastauftrags zuständig sein. Je nachdem, welche Aufträge anliegen, kann hierzu die eine oder andere Benutzeroberfläche geeigneter sein. In einem anderen Szenario überwacht ein erster Benutzer den Scanner 20 und ein zweiter Benutzer den Drucker 30, wobei beide Benutzer die Möglichkeit haben, Aufträge zu übergeben. Für den ersten Benutzer ist es praktischer, die Scannerbenutzeroberfläche 24 zu benutzen, während es für den zweiten Benutzer praktischer ist, die Druckerbenutzeroberfläche 34 zu benutzen.

Der entfernte Scanner 20 verleiht einem entfernten Benutzer den besonderen Vorteil, einen entfernten Abtastauftrag zu übergeben, ohne das Originaldokument physisch zum Standort des Druckers 30 bringen zu müssen. Der entfernte Benutzer behält die Kontrolle über die Abtastparameter, wodurch Kommunikationsfehler vermieden werden.

Es ist vorgesehen, dass eine Vielzahl von Scannern und zugehörigen Scannercomputern in Wirkbeziehung miteinander mit einem gegebenen Drucker und Druckercomputer verbunden sein können. Beispielsweise können ein erster Scanner und ein erster Scannercomputer und ein zweiter Scanner und ein zweiter Scannercomputer mit einem einzelnen Druckercomputer (und Drucker) in Wirkbeziehung über ein Netz oder einen Hub (Vermittlungseinheit) verbunden sein. In dieser Konfiguration ist vorgesehen, dass die Druckerbenutzeroberfläche 34 die Eingabe und Übergabe von Abtastparametern für den ersten Scanner oder für den zweiten Scanner ermöglicht, wobei die Abtastparameter durch den entsprechenden Scannercomputer 22 an den entsprechenden Scanner 20 übermittelt werden. In einer weiteren Konfiguration umfasst der erste Scannercomputer eine erste Benutzeroberfläche und der zweite Scannercomputer umfasst eine zweite Benutzeroberfläche, wobei die erste Benutzeroberfläche und die zweite Benutzeroberfläche benutzerseitig ausgewählte Abtastparameter für den ersten Scanner oder für den zweiten Scanner empfangen können.

Obwohl die Erfindung mit besonderem Bezug auf bevorzugte Ausführungsbeispiele beschrieben wurde, ist die Erfindung nicht darauf beschränkt, sondern kann innerhalb des Schutzbereichs der nachstehenden Ansprüche Änderungen und Abwandlungen unterzogen werden.

### Liste der Bezugszeichen

- 10: Dokumentabtastvorrichtung
- 12: Vermittlungseinheit
- 20: Scanner
- 21: "Start"-Taste
- 22: Scannercomputer
- 24: Scannerbenutzeroberfläche
- 25: Speichereinrichtung
- 26: automatischer Einzelblatteinzug
- 28: Vorlagenglas
- 30: Drucker
- 32: Druckercomputer
- 34: Druckerbenutzeroberfläche
- 36: Speichereinrichtung
- 40: Anzeige
- 42: Eingabevorrichtung
- 44: Maus

## Patentansprüche

1. Dokumentabtastvorrichtung (10) zum Abtasten eines Dokuments mit
einem Scanner (20) und einer zugehörigen Scannerbenutzeroberfläche (24); und
einem in Wirkbeziehung mit dem Scanner (20) verbundenen Drucker (30), mit einer zugehörigen Druckerbenutzeroberfläche (34),
**dadurch gekennzeichnet, dass**
der Scanner das Dokument nach benutzerseitig gewählten Abtastparametern abtastet, die über die Scannerbenutzeroberfläche und/oder die Druckerbenutzeroberfläche eingebbar sind und hiervon eine abgetastete Bilddatei erstellt.

2. Dokumentabtastvorrichtung nach Anspruch 1,
**dadurch gekennzeichnet, dass**
die benutzerseitig gewählten Abtastparameter einen Teil der Abtastung des Dokuments steuern.

3. Dokumentabtastvorrichtung nach Anspruch 1 oder 2,
**dadurch gekennzeichnet, dass**
der Scanner (20) mit einem Scannercomputer (22) verbunden ist, um die abgetastete Bilddatei von dem Scanner (20) zu empfangen, und dass sich die Scannerbenutzeroberfläche (24) zur Eingabe der benutzerseitig gewählten Abtastparameter auf dem Scannercomputer befindet.

4. Dokumentabtastvorrichtung nach einem der vorhergehenden Ansprüche,
**dadurch gekennzeichnet, dass**
der Drucker mit einem Druckercomputer (32) verbunden ist und dass sich die Druckerbenutzeroberfläche (34) zur Eingabe der benutzerseitig gewählten Abtastparameter auf dem Druckercomputer befindet.

5. Dokumentabtastvorrichtung nach einem der vorhergehenden Ansprüche,
**dadurch gekennzeichnet, dass**
der Druckercomputer (32) weiterhin mit dem Scannercomputer (22) verbunden ist.

6. Dokumentabtastvorrichtung nach einem der vorhergehenden Ansprüche,
**dadurch gekennzeichnet, dass**
der Drucker (30) Bilder druckt, die der vom Scanner (20) erstellten abgetasteten Bilddatei entsprechen.

7. Dokumentabtastvorrichtung (10) nach einem der vorhergehenden Ansprüche,
**dadurch gekennzeichnet, dass**
der Druckercomputer (32) eine Speichereinrichtung (36) zum Speichern der abgetasteten Bilddatei umfasst.

8. Dokumentabtastvorrichtung (10) nach einem der vorhergehenden Ansprüche,
**dadurch gekennzeichnet, dass**
der Drucker (30), der Scanner (20), der Scannercomputer (22) und der Druckercomputer (32) in einer gemeinsamen Sprache miteinander kommunizieren.

9. Dokumentabtastvorrichtung (10) nach einem der vorhergehenden Ansprüche,
**dadurch gekennzeichnet, dass**
der Scanner (20) und der Scannercomputer (22) in einer ersten Computersprache miteinander kommunizieren, und dass der Scannercomputer (22) und der Druckercomputer (32) in einer zweiten, anderen Computersprache miteinander kommunizieren.

10. Dokumentabtastvorrichtung nach einem der vorhergehenden Ansprüche,
**dadurch gekennzeichnet, dass**
die Scannerbenutzeroberfläche (24) und die Druckerbenutzeroberfläche (34) derart ausgelegt sind, dass sie benutzerseitig gewählte Abtastparameter empfangen und die Ausführung von Abtastparametern vor der Ausführung zuvor übergebener Abtastparameter ausschließen.

11. Dokumentabtastvorrichtung nach einem der vorhergehenden Ansprüche,
**dadurch gekennzeichnet, dass**
die Scannerbenutzeroberfläche (24) und die Druckerbenutzeroberfläche (34) eine Verriegelungsanzeige umfassen.

12. Dokumentabtastvorrichtung nach einem der vorhergehenden Ansprüche,
**dadurch gekennzeichnet, dass**
die Scannerbenutzeroberfläche (24) einen berührungsempfindlichen Anzeigeschirm umfasst.

13. Dokumentabtastvorrichtung nach einem der vorhergehenden Ansprüche,
**dadurch gekennzeichnet, dass**
die Druckerbenutzeroberfläche (34) einen berührungsempfindlichen Anzeigeschirm umfasst.

14. Dokumentabtastvorrichtung nach Anspruch 10 oder 1
**dadurch gekennzeichnet, dass**
weiterhin eine Warteschlange für benutzerseitig gewählte Abtastparameter vorgesehen ist, die während der Ausführung zuvor übergebener, benutzerseitig gewählter Abtastparameter übergeben wurden.

15. Dokumentabtastvorrichtung (10) nach Anspruch 14,
**dadurch gekennzeichnet, dass**
die Warteschlange in der "FiFo"-Prioritätssteuerung (First in First out) abgearbeitet wird.

16. Dokumentabtastvorrichtung (10) zum Abtasten von Dokumenten nach benutzerseitig gewählten Abtastparametern mit:
(a) einem Drucker;
(b) einem mit dem Drucker (30) verbundenen Druckercomputer (32) und einer Druckerbenutzeroberfläche (34) zur Übernahme benutzerseitig gewählter Abtastparameter;
(c) einem ersten Scanner (20) zum Abtasten eines Dokuments nach benutzerseitig ausgewählten Abtastparametern;
(d) einem mit dem Druckercomputer (32) und dem ersten Scanner (20) verbundenen ersten Scannercomputer (22) zur Übernahme benutzerseitig gewählter Abtastparameter für den ersten Scanner (20) und zur Übergabe der benutzerseitig gewählten Abtastparameter an den ersten Scanner (20);
(e) einem zweiten Scanner (20) zum Abtasten eines Dokuments nach benutzerseitig gewählten Abtastparametern;
(f) einem mit dem Druckercomputer (32) und dem zweiten Scanner (20) verbundenen zweiten Scannercomputer (22) zur Übernahme benutzerseitig gewählter Abtastparameter für den zweiten Scanner (20) und zur Übergabe der benutzerseitig gewählten Abtastparameter an den zweiten Scanner (20);
wobei die Druckerbenutzeroberfläche (34) zur Bereitstellung benutzerseitig gewählter Abtastparameter für den ersten Scanner (20) und benutzerseitig gewählter Abtastparameter für den zweiten Scanner (20) ausgelegt ist.

17. Dokumentabtastvorrichtung (10) nach Anspruch 16,
**dadurch gekennzeichnet, dass**
der erste Scannercomputer (22) eine erste Scannerbenutzeroberfläche (24) umfasst, und dass der zweite Scannercomputer (22) eine zweite Scannerbenutzeroberfläche (24) umfasst, wobei die erste Scannerbenutzeroberfläche (24) und die zweite Scannerbenutzeroberfläche (24) darauf ausgelegt sind, benutzerseitig gewählte Abtastparameter für den ersten Scanner (20) und für den zweiten Scanner (20) zu empfangen.

18. Verfahren zur Steuerung einer Dokumentabtastvorrichtung (10), das folgende Schritte umfasst:
(a) Übergeben erster Abtastparameter von einer Scannerbenutzeroberfläche (24) oder einer Druckerbenutzeroberfläche (34) an einen Scanner (20) zur Steuerung des Scanners (20) während der Abtastung eines Dokuments, und
(b) Ausschließen, dass der Scanner (20) nachfolgend von der Scannerbenutzeroberfläche (24) und der Druckerbenutzeroberfläche (34) übergebene Abtastparameter ausführt, bevor die ersten Abtastparameter abgeschlossen sind.

19. Verfahren nach Anspruch 18, das zudem das Einreihen nachfolgend übergebener Abtastparameter in eine Warteschlange während der Ausführung zuvor übergebener Abtastparameter umfasst.

20. Verfahren nach Anspruch 18, das zudem das Bewahren nachfolgend übergebener Abtastparameter in eine Warteschlange in einer Fi-Fo-Prioritätssteuerung (First in - First out) umfasst.

21. Verfahren nach Anspruch 18, das zudem das Wiederholen von Schritt (b) umfasst, bis die ersten Abtastparameter ausgeführt worden sind.

22. Verfahren zur Steuerung eines Scanners (20), das folgende Schritte umfasst:
(a) Übergeben von benutzerseitig gewählten Abtastparametern an den Scanner (20) von einer zum Scanner (20) entfernt angeordneten Benutzeroberfläche; und
(b) Starten des Abtastvorgangs gemäß den übergebenen, benutzerseitig gewählten Abtastparametern nach Bereitstellung eines Bestätigungssignals an dem Scanner (20).

23. Verfahren nach Anspruch 22,
**dadurch gekennzeichnet, dass**
das Übergeben der Abtastparameter an den Scanner das Übergeben der benutzerseitig gewählten Abtastparameter von einem Scannercomputer (22) oder von einem Druckercomputer (32) umfasst.

24. Verfahren nach Anspruch 22, das zudem ausschließt, dass nachfolgend übergebene Abtastparameter ausgeführt werden, bevor der gestartete Abtastvorgang abgeschlossen ist.

25. Verfahren nach Anspruch 22, das zudem das Einreihen nachfolgend übergebener, benutzerseitig gewählter Abtastparameter in eine Warteschlange während der Ausführung zuvor übergebener Abtastparameter umfasst.

26. Verfahren nach Anspruch 25, das zudem das nachfolgende Übergeben von Abtastparametern aus der Warteschlange in einer Fi-Fo-Prioritätssteuerung (First in - First out) umfasst.

27. Verfahren zur Steuerung einer Dokumentabtastvorrichtung (10), das folgende Schritte umfasst:
(a) Übergeben einer Menge von benutzerseitig gewählten Abtastparametern an einen Scanner (20) von einem entfernten Ort;
(b) Abtasten des Dokuments gemäß der benutzerseitig gewählten Abtastparameter bei Bereitstellung eines Bestätigungssignals an dem Scanner (20);
(c) Bereitstellen eines benutzerseitig eingegebenen Signals zum Abschließen des Abtastvorgangs gemäß den benutzerseitig gewählten Abtastparametern.

28. Steuervorrichtung für eine Dokumentabtastvorrichtung (10) mit einem Scanner (20), einem unabhängigen Scannercomputer (22), einem Drucker (30) und einem unabhängigen Druckercomputer (32), wobei die Steuervorrichtung eine Verriegelung in dem Druckercomputer (32) oder in dem Scannercomputer (22) umfasst, um die Ausführung nachfolgend übergebener, benutzerseitig gewählter Abtastparameter während der Ausführung zuvor übergebener, benutzerseitig gewählter Abtastparameter auszuschließen.

29. Steuervorrichtung nach Anspruch 28, die zudem ein Steuerprogramm zum Betreiben des Druckercomputers (32) oder des Scannercomputers (22) umfasst, wobei das Steuerprogramm darauf ausgelegt ist, eine Menge benutzerseitig gewählter Abtastparameter während der ausgeschlossenen Übergabe zu erstellen.

30. Steuervorrichtung nach Anspruch 28,
**dadurch gekennzeichnet, dass**
das Programm zur Vorauserstellung von Abtastparametern darauf ausgelegt ist, die Modifikation der benutzerseitig gewählten Abtastparameter während der ausgeschlossenen Übergabe zu unterbinden.
